# EUROPÄISCHE PATENTSCHRIFT

(11) **EP 3 275 815 B1**
(45) Veröffentlichungstag und Bekanntmachung des Hinweises auf die Patenterteilung: **07.08.2019**
(21) Anmeldenummer: 17183091.2
(22) Anmeldetag: 25.07.2017
(51) Int. Cl.: B65G 67/28, B65G 69/18

(54) **VORRICHTUNG ZUR SCHÜTTGUTANNAHME**
DEVICE FOR RECEIVING BULK GOOD
DEPOSITIF POUR PRENDRE UN PRODUIT EN VRAC

(30) Priorität: 26.07.2016 DE 202016004590 U
(43) Veröffentlichungstag der Anmeldung: 31.01.2018
(73) Patentinhaber: Rematec GmbH & Co. KG, 84378 Dietersburg (DE)
(72) Erfinder: Steiger, Ulrich, 84378 Dietersburg (DE); Steiger, Robert, 84378 Dietersburg (DE)
(74) Vertreter: Lichtnecker, Markus Christoph

(56) Entgegenhaltungen:
- EP-A1- 1 593 623
- EP-A2- 2 796 377
- DE-A1-102015 220 140
- DE-U1- 9 312 969
- GB-A- 832 117
- JP-A- H01 150 611
- JP-A- H06 156 727
- JP-U- S5 933 818
- US-A- 2 546 262
- US-A- 4 380 284
- US-B1- 6 581 778

## Beschreibung

Stationäre Schüttgutannahmen für Schubbodenfahrzeuge, z.B. LKWs, üblicher Bauart sind im Boden versenkt und benötigen eine Grube, in der die Transportgeräte versenkt werden. Auf diese wird das Schüttgut durch den Fahrzeug-Schubboden abgeworfen. Das Material muss dann aus der Grube wieder überhoben werden.

Damit sind Boden- und Erdaushubarbeiten notwendig. Diese sind zeitaufwendig, teuer und teilweise nachträglich nicht machbar.

Für wasserempfindliche Materialien muss die Technik zusätzlich mit entsprechendem Aufwand eingehaust werden. Eine Einhausung ist auch notwendig, wenn eine Staubminderung notwendig ist. Die Technik muss zusätzlich unfalltechnisch abgesichert werden.

DE 93 12 969 U1 offenbart eine Übergabeeinrichtung für Schüttgut, bei der Schüttgut über einen Bandförderer nach oben gefördert wird. US 4 380 284 A offenbart weiter eine Vorrichtung geeignet zur Schüttgutannahme, insbesondere von Schubbodenfahrzeugen, umfassend ein Gehäuse mit zumindest zwei Öffnungen, wobei eine erste Öffnung als Annahmeöffnung zur Aufnahme von Schüttgut ausgebildet ist, und eine zweite Öffnung einem Abwurfschacht für Schüttgut zugeordnet ist, wobei eine im Gehäuse umlaufende Transportkette vorgesehen ist, die Transportkette an den Gehäusewänden so entlang geführt wird, dass die Transportkette die Annahmeöffnung zumindest nicht wesentlich reduziert, die Transportkette zumindest abschnittsweise am Boden des Gehäuses verläuft und im Untertrum beschickbar ist, das Schüttgut über die Transportkette zum Abwurfschacht gefördert wird, wobei der Abwurfschacht auf einem höheren Niveau als eine Ladekante, die der Unterkante der Aufnahmeöffnung entspricht, liegt.

Der Erfindung liegt die Aufgabe zugrunde, eine Vorrichtung, ein System sowie Verfahren zur Schüttgutannahme zu schaffen, wobei für die Erstellung keine Bodenvertiefung in Form einer Grube notwendig ist.

Diese Aufgabe wird durch die Vorrichtung, das System und die Verfahren der unabhängigen Ansprüche gelöst.

Die Vorrichtung zur Schüttgutannahme, insbesondere von Schubbodenfahrzeugen, umfasst ein Gehäuse mit zumindest zwei Öffnungen für eine Annahmeöffnung und einen Abwurfschacht für Schüttgüter.

Das Gehäuse kann auf einer ebenen Bodenplatte abgestellt werden.

Es ist eine im Gehäuse umlaufende Transportkette vorgesehen, wobei das Schüttgut über die Transportkette zum Abwurfschacht gefördert wird.

Die Transportkette verläuft zumindest abschnittsweise am Boden des Gehäuses und ist im Untertrum beschickbar.

Gemäß einer Ausführungsform ist das Gehäuse in geschlossener Bauweise ausgeführt und alle für die Annahme und Weiterförderung des Schüttguts erforderlichen Bauteile sind innerhalb des Gehäuses angeordnet.

Nach einer weiteren Ausführungsform ist die Annahmeöffnung durch ein Tor verschließbar.

Erfindungsgemäß umfassen die Bauteile eine im Gehäuse umlaufende Transportkette, die mittels Kettenrädern an den Gehäusewänden so entlang geführt wird, dass die Transportkette die Annahmeöffnung nicht wesentlich reduziert.

Nach einer weiteren Ausführungsform besteht die Transportkette aus zwei parallel verlaufenden Kettensträngen und hierzu quer angeordneten Mitnehmern.

Erfindungsgemäß läuft die Transportkette am Boden des Gehäuses und wird im Untertrum beschickt.

Nach einer weiteren Ausführungsform ist eine Spannsektion mit Kettenrädern für die Transportkette vorhanden, wobei die Spannsektion nach der ersten oberen Umlenkung, in Laufrichtung gesehen, so angeordnet ist, dass eventuell anhaftendes Schüttgut in den Abwurfschacht fällt.

Gemäß einer weiteren Ausführungsform wird das Schüttgut über die Transportkette zum Abwurfschacht gefördert, wobei der Abwurfschacht auf einem höheren Niveau als eine Ladekante, die der Unterkante des Aufnahmebereichs entspricht, liegt.

Nach einer weiteren Ausführungsform ist der Abwurfschacht oberhalb einer nachfolgenden Einrichtung zur Weiterbehandlung des Schüttgutes angeordnet.

Gemäß einer weiteren Ausführungsform weist das Gehäuse noch zusätzliche Anschlüsse für eine Absauganlage auf, die einen Unterdruck im Gehäuse erzeugt.

Die erfindungsgemäße Vorrichtung bietet insbesondere die Möglichkeit, gleichzeitig Witterungsschutz- und Staubreduktionsansprüche zu erfüllen und einen Weitertransport mit entsprechender Abgabehöhe zu ermöglichen. Zudem kann die Vorrichtung im Stillstand abgesichert sein.

Mit der Erfindung wird erreicht, dass die Technik ohne Grube aufgestellt werden kann. Die Technik ist abschließbar und damit gegen unbefugten Zugriff geschützt. Ein Wetter- und Staub-Emissionsschutz wird durch die geschlossene Bauweise erreicht. Der Weitertransport durch Anhebung des Materials durch die Fördertechnik in den Abwurfschacht mit geeigneter Abwurfhöhe ist gewährleistet. Staubaustritt wird durch Absaug-Anschlüsse für eine Absauganlage vermindert.

Insbesondere kann die Vorrichtung sicher auf einer ebenen Bodenplatte abgestellt werden. Ein fester und sicherer Stand wird dadurch gewährleistet. Die Bodenplatte kann zusammen mit der Vorrichtung ein System bilden.

Ferner kann das System eine Einrichtung zur Weiterbehandlung des Schüttgutes umfassen. Die Einrichtung kann sich in der gleichen Höhe oder höher als die Ladekante erstrecken. Eine Grube oder dergleichen ist somit nicht erforderlich. Eine Weiterbehandlung kann insbesondere in derselben Arbeitsebene erfolgen.

Der Abwurfschacht kann insbesondere oberhalb der nachfolgenden Einrichtung angeordnet sein. So kann das Schüttgut auf einfache Weise von der nachfolgenden Einrichtung aufgenommen werden.

Alle hier beschriebenen Ausführungsformen und Bauteile der Vorrichtung sowie des Systems sind insbesondere dazu ausgebildet, nach den hier beschriebenen Verfahren betrieben bzw. montiert zu werden. Ferner können alle hier beschriebenen Ausführungsformen der Vorrichtung bzw. des Systems sowie alle hier beschriebenen Ausführungsformen der Verfahren jeweils miteinander kombiniert werden, insbesondere auch losgelöst von der konkreten Ausgestaltung, in deren Zusammenhang sie erwähnt werden.

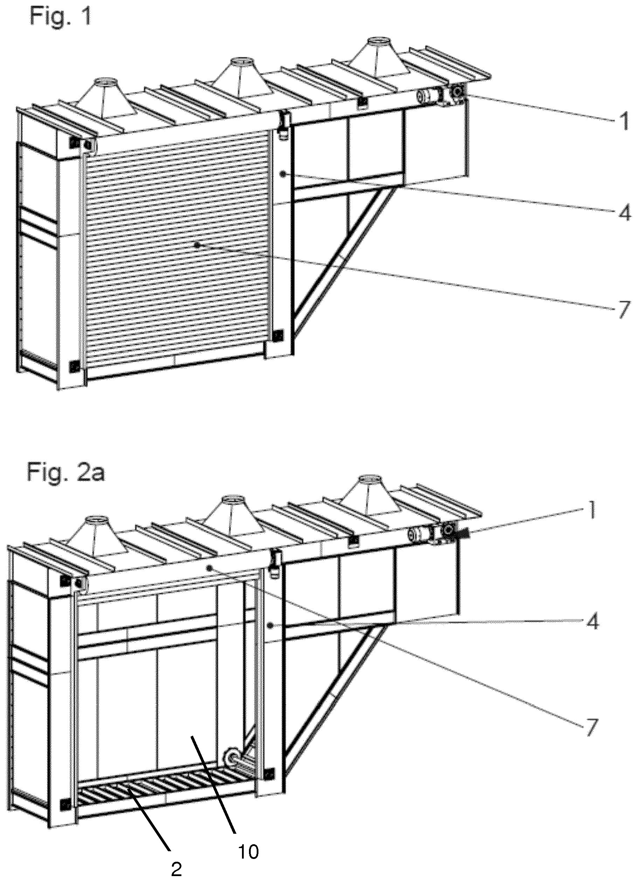

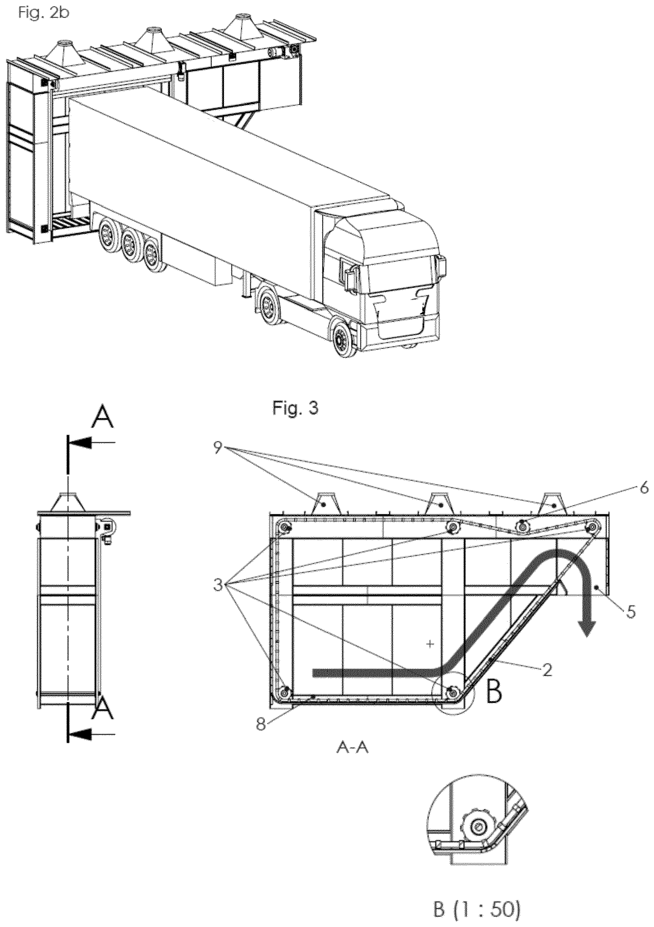

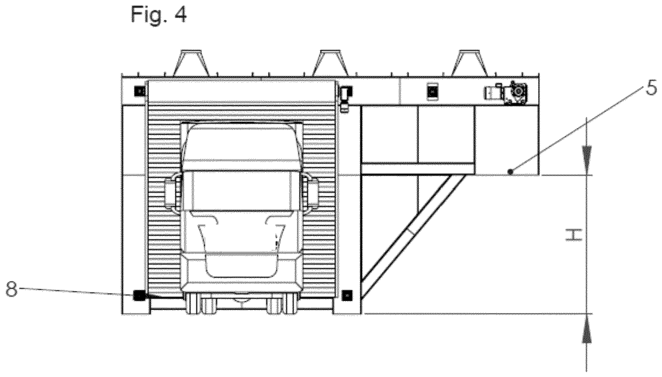

Ein Ausführungsbeispiel der Erfindung wird anhand der Figuren 1 bis 5 erläutert. Es zeigen
- Fig. 1: eine Perspektivansicht einer Ausführungsform einer erfindungsgemäßen Vorrichtung mit geschlossenem Tor,
- Fig. 2a: die Vorrichtung gemäß Fig. 1 mit geöffnetem Tor,
- Fig. 2b: die Vorrichtung gemäß Fig. 2a mit einem LKW,
- Fig.3: Schnittansichten der Vorrichtung gemäß Fig. 1 mit dargestellter Laufrichtung, und
- Fig.4: eine Vorderansicht der Vorrichtung gemäß Fig. 1.

In den Figuren ist die Anlagentechnik mit Antrieb 1, umlaufender Kette 2, Umlenkrädern 3, Gehäuse 4, Abwurfschacht 5, Spannsektion 6, schließbarem Tor 7, Ladekante 8 und Absaug-Anschlüssen 9 dargestellt.

Das Tor 7 schließt das Gehäuse 4 im Zeitraum der Nichtbenutzung ab.

### Bezugszeichenliste

- 1: Antrieb
- 2: Umlaufende Kette
- 3: Umlenkräder
- 4: Gehäuse
- 5: Abwurfschacht
- 6: Spannsektion
- 7: Schließbares Tor
- 8: Ladekante
- 9: Absaug-Anschlüsse
- 10: Annahmeöffnung

- H: Abwurferhöhung gegenüber der Ladekante

## Patentansprüche

1. Vorrichtung zur Schüttgutannahme, insbesondere von Schubbodenfahrzeugen, umfassend
ein Gehäuse (4) mit zumindest zwei Öffnungen, wobei
eine erste Öffnung als Annahmeöffnung (10) zur Aufnahme von Schüttgut ausgebildet ist, und eine zweite Öffnung einem Abwurfschacht (5) für Schüttgut zugeordnet ist, wobei
eine im Gehäuse (4) umlaufende Transportkette (2) vorgesehen ist,
die Transportkette (2) an den Gehäusewänden so entlang geführt wird, dass die Transportkette (2) die Annahmeöffnung (10) zumindest nicht wesentlich reduziert,
die Transportkette (2) zumindest abschnittsweise am Boden des Gehäuses (4) verläuft und im Untertrum beschickbar ist,
die Kette um die Annahmeöffnung verläuft,
das Schüttgut über die Transportkette (2) zum Abwurfschacht (5) gefördert wird, wobei
der Abwurfschacht (5) auf einem höheren Niveau als eine Ladekante (8), die der Unterkante der Aufnahmeöffnung (10) entspricht, liegt.

2. Vorrichtung nach Anspruch 1,
**dadurch gekennzeichnet,**
**dass** der Abwurfschacht (5) oberhalb einer nachfolgenden Einrichtung zur Weiterbehandlung des Schüttgutes angeordnet ist.

3. Vorrichtung nach Anspruch 1 oder 2,
**dadurch gekennzeichnet,**
**dass** das Gehäuse (4) in geschlossener Bauweise ausgeführt ist und alle für die Annahme und/oder Weiterförderung des Schüttguts erforderlichen Bauteile innerhalb des Gehäuses (4) angeordnet sind.

4. Vorrichtung nach einem der vorhergehenden Ansprüche,
**dadurch gekennzeichnet,**
**dass** die Annahmeöffnung (10) durch ein Tor (7) verschließbar ist.

5. Vorrichtung nach einem der vorhergehenden Ansprüche,
**dadurch gekennzeichnet,**
**dass** die Transportkette (2) mittels Kettenrädern (3) an den Gehäusewänden entlang geführt wird.

6. Vorrichtung nach einem der vorhergehenden Ansprüche,
**dadurch gekennzeichnet,**
**dass** die Transportkette (2) zwei parallel verlaufende Kettenstränge und hierzu quer angeordnete Mitnehmer umfasst.

7. Vorrichtung nach einem der vorhergehenden Ansprüche,
**dadurch gekennzeichnet,**
**dass** eine Spannsektion (6) mit Kettenrädern (3) für die Transportkette (2) vorhanden ist.

8. Vorrichtung nach Anspruch 7,
**dadurch gekennzeichnet,**
**dass** die Spannsektion (6), insbesondere nach der ersten oberen Umlenkung, in Laufrichtung gesehen, so angeordnet ist, dass eventuell anhaftendes Schüttgut in den Abwurfschacht (5) fällt.

9. Vorrichtung nach einem der vorhergehenden Ansprüche,
**dadurch gekennzeichnet,**
**dass** das Gehäuse (4) Anschlüsse (9) für eine Absauganlage aufweist, die einen Unterdruck im Gehäuse (4) erzeugt.

10. Verfahren zur Annahme und Weiterförderung von Schüttgut, insbesondere mit einer Vorrichtung nach einem der Ansprüche 1 bis 9,
bei dem Schüttgut durch eine Annahmeöffnung (10) in einem Gehäuse (4) aufgenommen wird, und
mittels einer im Gehäuse (4) umlaufenden Transportkette (2), die an den Gehäusewänden so entlang geführt wird, dass die Transportkette (2) die Annahmeöffnung (10) zumindest nicht wesentlich reduziert und die zumindest abschnittsweise am Boden des Gehäuses (4) verläuft und im Untertrum beschickt wird, wobei die Kette um die Annahmeöffnung verläuft, zu einem Abwurfschacht (5) weitergefördert wird, welcher auf einem höheren Niveau als eine Ladekante (8), die der Unterkante der Aufnahmeöffnung (10) entspricht, liegt.

11. System mit einer Vorrichtung zur Schüttgutannahme nach einem der Ansprüche 1 bis 9 und einer ebenen Bodenplatte, insbesondere wobei die Bodenplatte ein Betonmaterial umfasst.

12. Verfahren zur Montage eines Systems nach Anspruch 11,
bei dem eine ebene Bodenplatte gegossen und/oder platziert wird, und die Vorrichtung zur Schüttgutannahme auf der Bodenplatte abgestellt wird.

## Claims

1. Apparatus for receiving bulk material, in particular from push-floor vehicles, comprising
a housing (4) having at least two openings, wherein a first opening is designed as a receiving opening (10) for receiving bulk material, and a second opening is assigned to a discharge chute (5) for bulk material, wherein
provided in the housing (4) is a circulating transport chain (2), the transport chain (2) being guided along the housing walls such that the transport chain (2) does not appreciably, at any rate, reduce the receiving opening (10),
at least sections of the transport chain (2) run along the bottom of the housing (4), and the transport chain can be loaded in the lower run,
the chain runs around the receiving opening,
the bulk material is conveyed to the discharge chute (5) via the transport chain (2), wherein
the discharge chute (5) lies at a higher level than a loading edge (8) which corresponds to the lower edge of the receiving opening (10).

2. Apparatus in accordance with claim 1,
**characterised in that**
the discharge chute (5) is disposed above downstream equipment for further treatment of the bulk material.

3. Apparatus in accordance with claim 1 or 2,
**characterised in that**
the housing (4) is of closed design and all the components required for receiving and/or conveying the bulk material are disposed inside the housing (4).

4. Apparatus in accordance with any of the previous claims,
**characterised in that**
the receiving opening (10) can be closed by a gate (7).

5. Apparatus in accordance with any of the previous claims,
**characterised in that**
the transport chain (2) is guided along the housing walls by means of chain wheels (3).

6. Apparatus in accordance with any of the previous claims,
**characterised in that**
the transport chain (2) comprises two parallel chain strands and drivers arranged transversely thereto.

7. Apparatus in accordance with any of the previous claims,
**characterised in that**
a tensioning section (6) with chain wheels (3) for the transport chain (2) is present.

8. Apparatus in accordance with claim 7,
**characterised in that**
the tensioning section (6), especially after the first upper deflection, as viewed in the direction of movement, is disposed such that any adhering bulk material falls into the discharge chute (5).

9. Apparatus in accordance with any of the previous claims,
**characterised in that**
the housing (4) has connections (9) for an extraction system which generates a negative pressure in the housing (4).

10. Method for receiving and conveying bulk material, especially comprising an apparatus according to any of claims 1 to 9,
in which bulk material is received through a receiving opening (10) in a housing (4) and,
by means of a transport chain (2) which circulates in the housing (4) and which is guided along the housing walls such that the transport chain (2) does not appreciably, at any rate, reduce the receiving opening (10) and at least sections of which run along the bottom of the housing (4) and can be loaded in the lower run, whereby the chain runs around the receiving opening,
said bulk material is conveyed further to a discharge chute (5) which lies at a higher level than a loading edge (8) which corresponds to the lower edge of the receiving opening (10).

11. System comprising an apparatus for receiving bulk material in accordance with any of claims 1 to 9 and a flat base plate, especially wherein the base plate comprises a concrete material.

12. Method for assembling a system in accordance with claim 11, in which a flat base plate is cast and/or put in place and the apparatus for receiving the bulk material is placed on the base plate.

## Revendications

1. Dispositif de réception de produits en vrac, en particulier de véhicules à fond coulissant, comprenant
un boîtier (4) pourvu d'au moins deux ouvertures,
dans lequel
une première ouverture est réalisée en tant qu'ouverture de réception (10) pour la réception de produits en vrac, et une seconde ouverture est associée à un puits d'éjection (5) pour les produits en vrac,
il est prévu une chaîne de transport (2) circulant dans le boîtier (4),
la chaîne de transport (2) est guidée le long des parois du boîtier de telle sorte que la chaîne de transport (2) ne réduise pas au moins sensiblement l'ouverture de réception (10),
la chaîne de transport (2) s'étend au moins localement sur le fond du boîtier (4) et peut être chargée dans le brin inférieur,
la chaîne s'étend autour de l'ouverture de réception,
les produits en vrac sont convoyés par la chaîne de transport (2) jusqu'au puits d'éjection (5),
le puits d'éjection (5) se trouve à un niveau supérieur à celui d'un bord de chargement (8) qui correspond au bord inférieur de l'ouverture de réception (10).

2. Dispositif selon la revendication 1,
**caractérisé en ce que**
le puits d'éjection (5) est agencé au-dessus d'un dispositif successif pour le traitement ultérieur des produits en vrac.

3. Dispositif selon la revendication 1 ou 2,
**caractérisé en ce que**
le boîtier (4) est réalisé en mode de construction fermé, et tous les composants nécessaires à la réception et/ou au convoyage des produits en vrac sont disposés à l'intérieur du boîtier (4).

4. Dispositif selon l'une des revendications précédentes,
**caractérisé en ce que**
l'ouverture de réception (10) peut être fermée par un portail (7).

5. Dispositif selon l'une des revendications précédentes,
**caractérisé en ce que**
la chaîne de transport (2) est guidée le long des parois du boîtier au moyen de roues à chaîne (3).

6. Dispositif selon l'une des revendications précédentes,
**caractérisé en ce que**
la chaîne de transport (2) comprend deux brins de chaîne parallèles et des éléments d'entraînement disposés transversalement à ceux-ci.

7. Dispositif selon l'une des revendications précédentes,
**caractérisé en ce que**
il est prévu une section formant tendeur (6) pourvue de roues à chaîne (3) pour la chaîne de transport (2).

8. Dispositif selon la revendication 7,
**caractérisé en ce que**
la section formant tendeur (6) est disposée en particulier an aval du premier renvoi supérieur, vu en direction de circulation, de telle sorte que les produits en vrac éventuellement adhérents tombent dans le puits d'éjection (5).

9. Dispositif selon l'une des revendications précédentes,
**caractérisé en ce que**
le boîtier (4) comprend des raccords (9) pour un système d'aspiration qui crée une dépression dans le boîtier (4).

10. Procédé pour recevoir et convoyer des produits en vrac, en particulier par un dispositif selon l'une des revendications 1 à 9,
dans lequel
des produits en vrac sont reçus dans un boîtier (4) à travers une ouverture de réception (10), et
sont convoyés jusqu'à un puits d'éjection (5) au moyen d'une chaîne de transport (2) circulant dans le boîtier (4), qui est guidée le long des parois du boîtier de telle sorte que la chaîne de transport (2) ne réduise pas au moins sensiblement l'ouverture de réception (10), et qui s'étend au moins localement sur le fond du boîtier (4) et peut être chargée dans le brin inférieur, la chaîne s'étendant autour de l'ouverture de réception, ledit puits d'éjection se trouvant à un niveau supérieur à celui d'un bord de chargement (8) qui correspond au bord inférieur de l'ouverture de réception (10).

11. Système comportant un dispositif de réception de produits en vrac selon l'une des revendications 1 à 9 et une plaque de fond plane, en particulier la plaque de fond comprenant un matériau à base de béton.

12. Procédé de montage d'un système selon la revendication 11,
dans lequel
une plaque de fond plane est coulée et/ou positionnée, et le dispositif de réception de produits en vrac est posé sur la plaque de fond.
